# EUROPEAN PATENT SPECIFICATION

(11) **EP 0 301 081 B1**
(45) Date of publication and mention of the grant of the patent: **21.04.1993**
(21) Application number: 88902292.7
(22) Date of filing: 08.02.1988
(51) Int. Cl.: F16H 1/32, F16H 1/36

(54) **DUAL EPICYCLIC SPEED CHANGER**
ZWEIFACH EPIZYKLISCHES UNTERSETZUNGSGETRIEBE
Réducteur de vitesse épicycloidal double

(30) Priority: 09.02.1987 US 12679; 23.03.1987 US 29521
(43) Date of publication of application: 01.02.1989
(73) Proprietor: LEW, Hyok Sang, Arvada, CO 80005 (US)
(72) Inventor: LEW, Hyok Sang, Arvada, CO 80005 (US)
(74) Representative: Baillie, Iain Cameron
(86) International application number: US8800352
(87) International publication number: WO8805877

(56) References cited:
- US-A- 987 430
- US-A- 2 972 910
- US-A- 3 472 097
- US-A- 4 665 771

## Description

The epicyclic speed changer of the present invention comprises a pair of rotary members respectively mounted on two eccentric sections included in a first shaft in a diametrically opposing arrangement, wherein the rotating motions of the two rotary members are coupled to one another as two sets of positively meshing elements such as the gear teeth respectively included in the two rotary members engage each other. One of the two rotary members is nonrotatably coupled to a holder member with a braking device in a radially shiftable arrangement, which holder member is disposed rotatably about the first shaft, while the other of the two rotary members is nonrotatably coupled to a second shaft in a radially shiftable arrangement. The rotation of the first shaft generates nonrotating orbiting motion for the one of the two rotary members and rotating orbiting motion for the other of the two rotary members, wherein the rotating portion of the rotating orbiting motion of the other of the two rotary members is transmitted to the second shaft. Another embodiment of the epicyclic speed changer of the present invention providing a very high speed change ratio comprises three rotary members; a first rotary member with a first set of meshing elements mounted on a first eccentric section of the first shaft, a second rotary member with a second and third set of meshing elements mounted on a second eccentric section disposed diametrically opposite to the first eccentric section, and a third rotary member with a fourth set of meshing elements mounted on a third eccentric section disposed diametrically opposite to the second eccentric section, wherein the first and second set of meshing elements engage each other and the third and fourth set of meshing elements engage each other. The first rotary member is nonrotatably coupled to a second shaft in a radially shiftable arrangement, while the third rotary member is nonrotatably coupled to a holder member in a radially shiftable arrangement.

The prior art US-A-987,430 discloses the features a) to e) of the independent claims 1,2 and 5 and teaches an epicyclic speed changer without the rotatably disposed holder member with a braking device, that is newly introduced by the present invention. The rotatable holder member with a braking device provides a built-in clutch adding a great deal of versatility in the operation of the epicyclic speed changer and, consequently, provides a powerful advantage in marketing over competitors.

In conventional epicyclic gear reducers, an orbiting gear mounted on an eccentric section of the input shaft engages a stationary gear disposed concentric to the input shaft, wherein the rotating motion of the orbiting gear is transmitted to an output shaft by a mechanical coupling nonrotatably coupling the orbiting gear to the output shaft in a radially shiftable arrangement. It is imperative to keep the eccentric dimension defining the orbiting radius at a very small value not only to accomplish a high speed reduction but also to limit the rotating and orbiting velocities of the orbiting gear to very low values. Otherwise, the epicyclic gear reducer self destructs due to the high wear and tear resulting from the high speed movements of the orbiting gear. Indeed, the beauty of the epicyclic gear reducer is in the theory that the high speed rotation of the input shaft can be reduced to the low speed motion of the orbiting gear without employing any gear rotating at the high speed of the input shaft, which theory requires the orbiting radius of a very small value. In actual practice, the theory of the epicyclic gear reducer has not scored much success, because a deadly gear teeth interference problem takes place as soon as the orbiting radius of small value is employed. In many existing epicyclic gear reducers, this deadly gear teeth interference problem has been addressed by employing exotic gear teeth designs, which have provided some success at the cost of strength and economy of the gear reducers.

The primary object of the present invention is to provide an epicyclic speed changer of very small orbiting radius that does not have the gear teeth interference problem.

Another object is to provide an epicyclic speed changer of very high speed change ratios.

A further object is to provide an epicyclic speed changer of a simple and compact design providing a high power transmission capacity.

Yet another object is to provide an epicyclic speed changer with a built-in clutch.

Yet a further object is to provide an epicyclic speed changer comprising two rotary members respectively mounted on two eccentric sections of a first shaft or an input member disposed in a diametrically opposing arrangement and two sets of meshing elements respectively included in two rotary members engaging each other, wherein one of the two rotary members is nonrotatably coupled to a stationary member or a rotatable member with braking means in a radially shaftable arrangement, while the other of the two rotary members is nonrotatably coupled to a second shaft or an output member in a radially shaftable arrangement.

Still another object is to provide an epicyclic speed changer comprising a first rotary member with a first set of meshing elements mounted on a first eccentric section of a first shaft or input member, a second rotary member with a second and third set of meshing elements mounted on a second eccentric section disposed in a diametrically opposing arrangement to the first eccentric section, and a third rotary member with a fourth set of meshing elements mounted on a third eccentric section of the first shaft or input member disposed in a diametrically opposing arrangement to the second eccentric section, wherein the first and second set of meshing elements engage each other and the third and fourth set of meshing elements engage each other. The third rotary member is nonrotatably coupled to a stationary member or rotatable member with braking means in a radially shiftable arrangement, while the first rotary member is nonrotatably coupled to a second shaft or an output member in a radially shaftable arrangement.

These and other objects of the present invention will become clear as the description thereof progresses. The present invention may be described with a great clarity and specificity by referring to the following figures :
Figure 1 illustrates an embodiment of the epicyclic speed changer of the present invention.
Figure 2 illustrates a cross section of the embodiment shown in Figure 1.
Figure 3 illustrates another embodiment of the epicyclic speed changer of the present invention.
Figure 4 illustrates a cross section of the embodiment shown in Figure 3.
Figure 5 illustrates an embodiment of the epicyclic speed changer of the present invention providing a very high speed change ratio.
Figure 6 illustrates another embodiment of the epicyclic speed changer of the present invention providing a very high speed change ratio.
Figure 7 illustrates a further embodiment of the epicyclic speed changer of the present invention providing a very high speed change ratio.
Figure 8 illustrates an embodiment of the meshing elements usable in conjunction with the epicyclic speed changer of the present invention.
Figure 9 illustrates another embodiment of the meshing elements usable in conjunction with the epicyclic speed changer of the present invention.

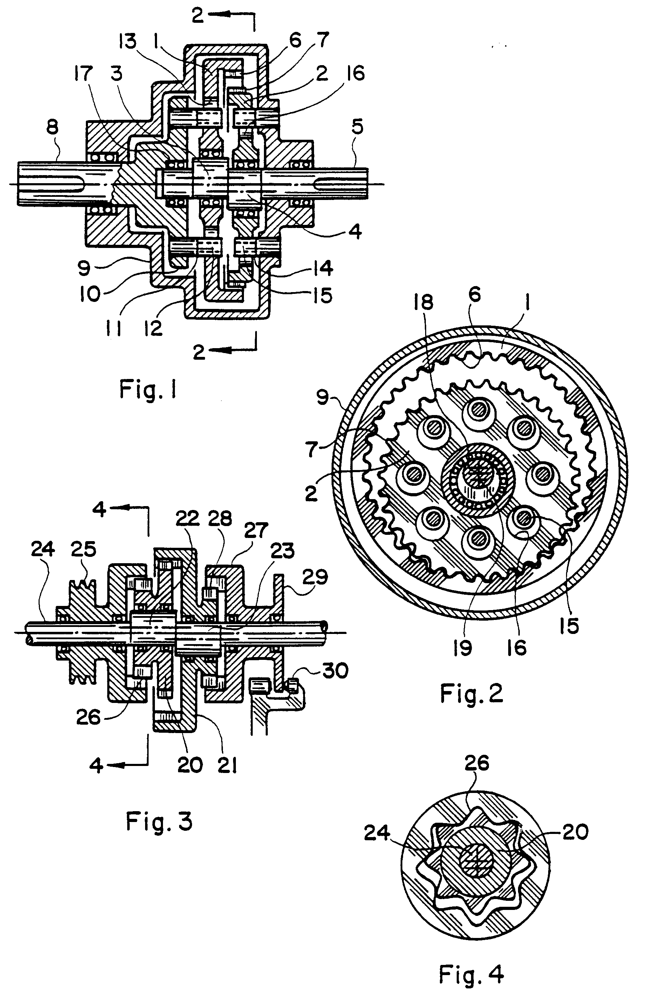

In Figure 1 there is illustrated an embodiment of the epicyclic speed changer of the present invention, which comprises a first and second rotary members 1 and 2, respectively mounted rotatably on two eccentric sections 3 and 4 included in a first shaft or input member 5, which eccentric sections are disposed in a diametrically opposing arrangement. The first rotary member 1 includes a set of meshing elements 6 such as a set of internal gear teeth, while the second rotary member 2 includes a set of meshing elements 7 such as a set of external gear teeth, wherein the two sets of meshing elements or gear teeth engage each other. The second shaft or output memeber 8 is disposed in line with the first shaft 5, wherein both shafts are supported by the frame 9 of the speed reducer in a rotatable arrangement. The first rotary member 1 is nonrotatably coupled to the flange 10 of the second shaft 8 in a radially shiftable arrangement by a coupling 11 comprising a plurality of posts 12 extending from the flange 10 and respectively engaging a plurality of oversized holes 13 included in the hub of the first rotary member 1. The second rotary member 2 is nonrotatably coupled to the frame 9 in a radially shiftable arrangement by a coupling 14 comprising a plurality of posts 15 extending from one end plate of the frame 9 and respectively engaging a plurality of oversized holes 16 included in the hub of the second rotary member 2. The bearing 17 rotatably supporting the extremities of the first and second shafts 5 and 6 provides stability for the rotating motions thereof.

In Figure 2 there is illustrated a cross section of the embodiment shown in Figure 1, which cross section is taken along plane 2-2 as shown in Figure 1. The first and second rotary members 1 and 2 are coupled to one another by the two sets of meshing elements or gear teeth 6 and 7 engaging each other. The coupling 14 connecting the second rotary member 2 to one end plate of the frame 9 in a nonrotating and radially shiftable arrangement comprises a plurality of posts 15 with sleeve bearings axially extending from one end plate of the frame 9 in an axisymmetric arrangement about the central axis of the first shaft or input member 18, which posts engage a plurality of oversized holes 16 disposed through the hub of the second rotary member 2 in an axisymmetric arrangement about the central axis 19 of the eccentric section 4. The coupling 11 connecting the first rotary member 1 to the flange 10 of the second shaft 8 in a nonrotatable and radially shiftable arrangement has the construction similar to the coupling 14 detailed in Figure 2.

The epicyclic gear reducer illustrated in Figures 1 and 2 operates on the following principles : The rotation of the first shaft 5 creates on orbiting motion of the first rotary member 1 about the central axis of the first shaft 5. Since the first rotary member 1 is under meshing engagement with the second rotary member 2 that is not allowed to rotate, the orbiting motion of the first rotary member generates the rotating motion thereof about its own central axis just like a roller rolling on an inner cylindrical surface of a circular cylindrical shell. The rotating motion of the first rotary member 1 is transmitted to the second shaft 8 by the radially shiftable coupling 11. The eccentric dimension of each of the two eccentric sections 3 and 4 can be a very small value without creating the problem of gear teeth interference, for the separation distance between the centers of the two rotary members 1 and 2 is equal to two times the eccentric dimension and the maximum distance between the pitch circles of the two sets of meshing elements is equal to four times the eccentric dimension. It should be mentioned that the nonrotatable and radially shiftable couplings employed in the epicyclic speed changers of the present invention can be other types than the particular couplings illustrated in Figures 1 and 2, which may include many different shaft coupling designs such as flex couplings, misalignment couplings, universal couplings, clearance spline couplings, etc. The gear teeth are only one of many types of meshing elements usable in conjunction with the epicyclic speed changers of the present invention, which types may include rollers and sprocket teeth, balls and sockets, as well as other combinations.

In Figure 3 there is illustrated another emobidment of the epicyclic speed changer of the present invention, which comprises two rotary members 20 and 21 respectively mounted rotatably on two eccentric sections 22 and 23 inlcuded in a first shaft 24. The first rotary member 20 is coupled to a V-belt drum or output member 25 in a nonrotatable and radially shiftable arrangement by a first clearance spline coupling 26, while the second rotary member 21 is coupled to a rotatable member 27 mounted on the first shaft 24 in a nonrotatable and radially shiftable arrangement by a second clearance spline coupling 28. The rotatable member 27 includes a brake means comprising a disc 29 and a caliper actuator 30. When the brake is activated, the rotating motion of the first shaft 24 is transmitted to the output member 25 at a changed speed. When the brake is deactivated, the rotating motion of the first shaft 24 is bypassed to the rotatable member 27 and, consequently, the output member 25 receives zero power transmission. It is now clear that the embodiment of the epicyclic speed changer shown in Figure 3 has a built-in clutch. It is also clear that the embodiment shown in Figure 1 can be readily modified to include a built-in clutch.

In Figure 4 there is illustrated a cross section of the embodiment shown in Figure 3, which cross section, taken along plane 4-4 as shown in Figure 3, illustrates the cross section of the clearance spline coupling 26, which couples the first rotary member 20 to the output member 25 in a nonrotatable and radially shiftable arrangement.

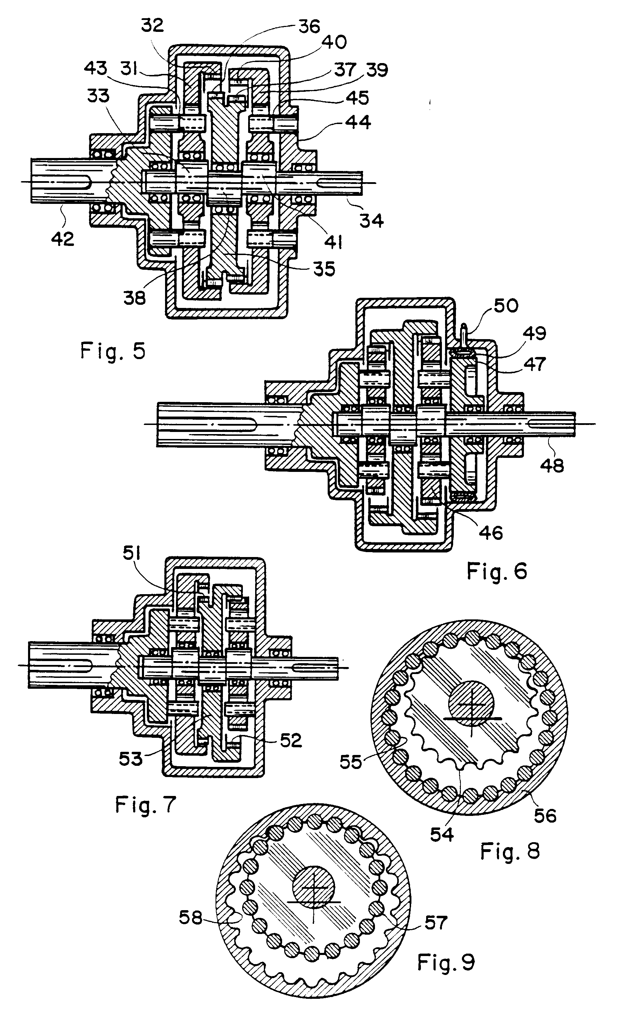

In Figure 5 there is illustrated an embodiment of the epicyclic speed changer of the present invention providing a very high speed change ratio, which comprises a first rotary member 31 with a first set of meshing elements 32 rotatably mounted on a first eccentric section 33 of a first shaft 34, a second rotary member 35 with a second and third set of meshing elements 36 and 37 rotatably mounted on a second eccentric section 38 disposed in a diametrically opposing arrangement to the first eccentric section 33, and a third rotary member 39 with a fourth set of meshing elements 40 rotatably mounted on a third eccentric section 41 of the first shaft 34 disposed in a diametrically opposing arrangement to the second eccentric section 38. The first and second set of meshing elements engage each other, and the third and fourth set of meshing elements engage each other. The first rotary member 31 is coupled to a second shaft or output member 42 in a nonrotatable and radially shiftable arrangement by a first nonrotatable and radially shiftable coupling 43, while the third rotary member 39 is coupled to the stationary frame 44 in a nonrotatable and radially shiftable arrangement by a second nonrotatable and radially shiftable coupling 45. The epicyclic speed changer shown in Figure 5 provides unlimited values of speed change ratios, which is evidenced by the fact that no rotating motion is transmitted from the input shaft 34 to the output shaft 42 when the pitch diameters of the second and third set of the meshing elements included in the second rotary member 35 are the same. Different types of the meshing elements,and the nonrotatable and radially shiftable couplings mentioned in conjunction with the operating principles of the embodiment shown in Figure 1 may replace the particular corresponding elements included in the embodiment shown in Figure 5.

In Figure 6 there is illustrated another embodiment of the epicyclic speed changer of the present invention providing a very high speed change ratio, which has essentially the same construction as the embodiment shown in Figure 5 with two exceptions. Firstly, the sets of internal gear teeth employed in Figure 5 are now replaced by sets of external gear teeth and the sets of external gear teeth included in Figure 5 are now replaced with sets of internal gear teeth. Secondly, the third rotating member 46 is now coupled nonrotatably and radially shiftably to a rotatable member 47 rotatably mounted on the first shaft 48 instead of the stationary frame of the speed changer, wherein the rotatable member 47 includes a brake means comprising an inflatable tube 49 with air valve 50, which combination provides a built-in clutch for the embodiment shown in Figure 6. It is clear that the embodiment shown in Figure 5 can be readily modified to include a built-in clutch by incoporating the built-in clutch arrangement shown in Figure 3 or 6.

In Figure 7 there is illustrated a further embodiment of the epicyclic speed changer of the present invention providing a very high speed change ratio, which has essentially the same construction as the embodiment shown in Figure 4 or 5 with one exception being that the second and third sets of meshing elements 51 and 52 included in the second rotary member 53 now employ a mixed combination of sets of internal and external gear teeth instead of the all internal or all external gear teeth. This embodiment can also be readily modified to include a built-in clutch as shown in the embodiment shown in Figure 3 or 6.

In Figure 8 there is shown an illustrative embodiment of the combination of meshing elements, which can be employed in place of simple or modified gear teeth, which combination includes a set of external sprocket teeth 54 and a set of internal rollers 55. The internal rollers are rotatably supported by a pair of flanges affixed to the two end faces of the rotary member 56, which flanges are not shown in Figure 8.

In Figure 9 there is illustrated another illustrative embodiments of the combination of meshing elements, which comprises a set of external rollers 57 and a set of internal sprocket teeth 58. It should be pointed out that the patentability of the epicyclic speed changer of the present invention is in the combination wherein each pair of intermeshing rotary members are rotatably mounted on two eccentric sections of a shaft or input member disposed in a diametrically opposing arrangement whereby the maximum separation between the two pitch circles of the two sets of intermeshing elements is equal to four times the eccentric dimension of the individual eccentric section, and the rotating or nonrotating motion of the individual rotary member is coupled to the output member or stationary frame by a nonrotatable and radially shiftable coupling, which combination eliminates the deadly problem of gear teeth interference and thus makes it possible to employ a very small value of the eccentric dimension.

## Claims

1. A mechanical speed changer comprising in combination:
a) a frame (9);
b) a power output member (8) of generally axisymmetric construction rotatably supported by the frame (9);
c) a shaft (5) disposed in line with the power output member (8) and rotatably supported by the frame (9), said shaft (5) including a first and second eccentric sections (3 and 4) disposed in a diametrically opposite eccentric arrangement;
d) a first rotary member (1) with a first set of meshing elements rotatably mounted on said first eccentric section (3) of the shaft (5), wherein said first set of meshing elements is disposed in a concentric arrangement about the central axis of said first eccentric section (3) of the shaft (5), and a plurality of circular holes (13) with central axis parallel to the shaft (5) disposed on a circle concentric to the central axis of said first eccentric section (3) of the shaft (5);
e) a second rotary member (2) with a second set of meshing elements rotatably mounted on said second eccentric section (4) of the shaft (5), wherein said second set of meshing elements is disposed in a concentric arrangement about the central axis of said second eccentric section (4) of the shaft (5), and a plurality of circular holes (16) with central axis parallel to the shaft (5) disposed on a circle concentric to the central axis of said second eccentric section (4) of the shaft (5); wherein said first and second sets of meshing elements engage each other over a portion of said concentric arrangements;
f) a plurality of circular cylindrical posts (12) disposed on a circle concentric to the central axis of the shaft (5) and rigidly affixed to a member (10) nonrotatably secured to the power output member (8) and respectively engaging the plurality of circular holes (13) included in one of the first and second rotary members (1 and 2) in a clearance relationship allowing orbiting motion of said one of the first and second rotary members (1 and 2) about the central axis of the shaft (5), wherein the combination of the circular holes (13) and the circular cylindrical posts (12) provides a coupling (11) that transmits rotating motion of said one of the first and second rotary members (1 and 2) created by the orbiting motion thereof to the power output member (8); and
g) a plurality of circular cylindrical posts (15) disposed on a circle concentric to the central axis of the shaft (5) and rigidly affixed to a holder member supported by the frame (9) and respectively engaging the plurality of circular holes (16) included in the other of the first and second rotary members (1 and 2) in a clearance relationship allowing orbiting motion of said the other of the first and second rotary members (1 and 2) about the central axis of the shaft (5), wherein the combination of the circular holes (16) and the circular cylindrical posts (15) provides a coupling (14) that disallows rotating motion of said other of the first and second rotary members (1 and 2) relative to said holder member;
wherein said first and second sets of meshing elements respectively included in the first and second rotary members (1 and 2) comprise a set of rollers (55 or 57) and a set of sprocket teeth (54 or 58) engaging each other.

2. A mechanical speed changer comprising in combination :
a) a frame (9);
b) a power output member (25 or 8) of generally axisymmetric construction rotatably supported by the frame (9);
c) a shaft (24 or 5) disposed in line with the power output member (25 or 8) and rotatably supported by the frame (9), said shaft (24 or 5) including a first and second eccentric sections (22 and 23) disposed in a diametrically opposite eccentric arrangement;
d) a first rotary member (20) with a first set of meshing elements rotatably mounted on said first eccentric section (22) of the shaft (24), wherein said first set of meshing elements is disposed in a concentric arrangement about the central axis of said first eccentric section (22) of the shaft (24);
e) a second rotary member (21) with a second set of meshing elements rotatably mounted on said second eccentric section (23) of the shaft (24), wherein said second set of meshing elements is disposed in a concentric arrangement about the central axis of said second eccentric section (23) of the shaft (24); wherein said first and second sets of meshing elements engage each other over a portion of said concentric arrangements;
f) a holder member (27) disposed rotatably about the central axis of the shaft (24) and including a braking means (30) for preventing said holder member (27) from rotating;
g) a first coupling (26) nonrotatably coupling one of the first and second rotary members (20 and 21) and the power output member (25 or 8) in a radially shiftable relationship therebetween, wherein said first coupling (26) transmits rotating motion of said one of the first and second rotary members (20 and 21) created by orbiting motion thereof to the power output member (25 or 8); and
h) a second coupling (28) nonrotatably coupling the other of the first and second rotary members (20 and 21) and the holder member (27) in a radially shiftable relationship therebetween,
wherein said second coupling (28) transmits rotating motion of said the other of the first and second rotary members (20 and 21) created by orbiting motion thereof to the holder member (27) when the braking means (30) is deactivated and thus disconnects transmission of rotating motion from the shaft (24 or 5) to the power output member (25 or 8); and said second coupling (28) prevents the other of the first and second rotary members (20 and 21) from rotating when the braking means (30) is activated and thus executes transmission of rotating motion from the shaft (24 or 5) to the power output member (25 or 8).

3. The combination as set forth in Claim 2 wherein said first and second sets of meshing elements comprise two sets of gear teeth (6 and 7) engaging each other.

4. The combination as set forth in Claim 2 wherein said first and second sets of meshing elements comprise a set of rollers (55 or 57) and a set of sprocket teeth (54 or 58) engaging each other.

5. A mechanical speed changer comprising in combination:
a) a frame (44);
b) a power output member (42) of generally axisymmetric construction rotatably supported by the frame (44);
c) a shaft (34) disposed in line with the power output member (42) and rotatably supported by the frame (44), said shaft (34) including a first eccentric section (33), a second eccentric section (38) disposed in a diametrically opposite eccentric arrangement to said first eccentric section (33), and a third eccentric section (41) disposed in a diametrically opposite eccentric arrangement to said second eccentric section (38);
d) a first rotary member (31) with a first set of meshing elements (32) rotatably mounted on said first eccentric section (33) of the shaft (34), wherein said first set of meshing elements (32) is disposed in a concentric arrangement about the central axis of said first eccentric section (33) of the shaft (34);
e) a second rotary member (35) with a second and third set of meshing elements (36 and 37) rotatably mounted on said second eccentric section (38) of the shaft (34), wherein said second and third set of meshing elements (36 and 37) are respectively disposed in a concentric arrangement about the central axis of said second eccentric section (38) of the shaft (34), and said first and second set of meshing elements (32 and 36) engage each other over a portion of said concentric arrangements thereof;
f) a third rotary member (39) with a fourth set of meshing elements (40) rotatably mounted on said third eccentric section (41) of the shaft (34), wherein said fourth set of meshing elements (40) is disposed in a concentric arrangement about the central axis of said third eccentric section (41) of the shaft (34), and said third and fourth set of meshing elements (37 and 40) engage each other over a portion of said concentric arrangements thereof;
g) a first coupling (43) nonrotatably coupling one of the first and third rotary members (31 and 39) to the power output member (42) in a radially shiftable relationship therebetween, wherein said first coupling (43) transmits rotating motion of said one of the first and third rotary members (31 and 39) created by orbiting motion thereof to the power output member (42); and
h) a second coupling (45) nonrotatably coupling the other of the first and third rotary members (31 and 39) to a holder member disposed coaxially about the central axis of the shaft (34) in a radially shiftable relationship therebetween.

6. The combination as set forth in Claim 5 wherein said holder member is affixed to the frame (44).

7. The combination as set forth in Claim 6 wherein each pair of the sets of meshing elements engaging each other comprises two sets of gear teeth (6 and 7) engaging each other.

8. The combination as set forth in Claim 6 wherein each pair of the sets of meshing elements engaging each other comprises a set of rollers (55 or 57) and a set of sprocket teeth (54 or 58) engaging each other.

9. The combination as set forth in Claim 5 wherein said holder member (47) is rotatably disposed and includes a braking means (49) for preventing said holder member (47) from rotating.

10. The combination as set forth in Claim 9 wherein each pair of the sets of meshing elements engaging each other comprises two sets of gear teeth (6 and 7)engaging each other.

11. The combination as set forth in Claim 9 wherein each pair of the sets of meshing elements engaging each other comprises a set of rollers (55 or 57) and a set of sprocket teeth (54 or 58) engaging each other.

## Patentansprüche

1. Ein epizyklisches Untersetzungsgetriebe bestehend aus einer Kombination von:
a) einem Gehäuse (9);
b) einem Leistungsausgangselement (8) einer allgemeinen axialsymmetrischen Gestaltung, das in dem Gehäuse (9) drehbar gelagert wird;
c) einer Welle (5), die koaxial zum Leistungsausgangselement (8) angeordnet ist und in dem Gehäuse (9) drehbar gelagert ist, wobei die Welle (5) einen ersten und einen zweiten exzentrischen Wellenabschnitt (3 und 4) aufweist, der diametral gegenüber angeordnet ist;
d) einem ersten Drehelement (1) mit einem ersten Satz von Zahneingriffelementen, die drehbar auf dem ersten exzentrischen Wellenabschnitt (3) der Welle (5) gelagert sind, wobei dieser erste Satz von Zahneingriffelementen in einer konzentrischen Anordnung um die Mittelachse des ersten exzentrischen Wellenabschnitts (3) der Welle (5) angeordnet ist, und einer Vielfalt von kreisförmigen Löchern (13), deren Mittelachse parallel zu der Welle (5) sind, und die auf einem zur Mittelachse des ersten exzentrischen Wellenabschnitts (3) der Welle (5) konzentrischen Kreis angeordnet sind;
e) einem zweiten Drehelement (2) mit einem zweiten Satz von Zahneingriffelementen, die drehbar auf dem zweiten exzentrischen Wellenabschnitt (4) der Welle (5) gelagert sind, wobei dieser zweite Satz von Zahneingriffelementen in einer konzentrischen Anordnung um die Mittelachse des zweiten exzentrischen Wellenabschnitts (4) der Welle (5) angeordnet ist, und einer Vielfalt von kreisförmigen Löchern (16), deren Mittelachse parallel zu der Welle (5) sind, die auf einem zur Mittelachse des zweiten exzentrischen Wellenabschnitts (4) der Welle (5) konzentrischen Kreis angeordnet sind; wobei der erste und der zweite Satz von Zahneingriffelementen über einem Teil der konzentrischen Anordnungen miteinander in Eingriff stehen;
f) eine große Anzahl von kreiförmigen, zylindrischen Stiften (12), die auf einem zur Mittelachse der Welle (5) konzentrischen Kreis angeordnet sind, und mit einem Element (10), das nicht-drehbar mit dem Leistungsausgangselement (8) starr verbunden ist und die in die große Anzahl der auf einem der ersten und zweiten Drehelemente (1 und 2) angeordneten, kreiförmigen Löchern (13) in einem einen Spielraum erlaubenden Verhältnis derart eingreifen, daß eine freie, orbitale Bewegung des einen der ersten und zweiten Drehelemente (1 und 2) um die Mittelachse der Welle (5) möglich ist, wobei die Kombination der kreisförmigen Löcher (13) und der kreisförmigen, zylindrischen Stifte (12) ein Verbindungsstück (11) bildet, das die Drehbewegung des einen der ersten und zweiten Drehelemente (1 und 2), die durch die orbitale Bewegung desselben entsteht, auf den Leistungsausgangselement (8) überträgt; und
g) einer großen Anzahl von kreisförmigen, zylindrischen Stiften (15), die auf einem zur Mittelachse der Welle (5) konzentrischen Kreis angeordnet sind, und mit einem Trägerelement, das von dem Gehäuse (9) gehalten wird starr verbunden sind, und die in die große Anzahl von den auf dem anderen der ersten und zweiten Drehelemente (1 und 2) angeordneten kreisförmigen Löchern (16) in einem einen Spielraum erlaubenden Verhältnis derart eingreifen, daß eine freie, orbitale Bewegung des andern der ersten und zweiten Drehelemente (1 und 2) um die Mittelachse der Welle (5) möglich ist, wobei die Kombination der kreisförmigen Löcher (16) und der kreisförmigen zylindrischen Stifte (15) ein Verbindungsstück (14) bildet, das die Drehbewegung des anderen der ersten und zweiten Drehelemente (1 und 2) gegnüber dem Trägerelement verhindert;
wobei der erste und der zweite Satz von Zahneingriffelementen, die auf dem ersten und dem zweiten Drehelement (1 und 2) jeweils vorgesehen sind, einen Satz von Walzen (55 oder 57) und einen Satz von Zahnradverzahnungen (54 oder 58) aufweisen, welche ineinander eingreifen.

2. Ein epizyklisches Untersetzungsgetriebe bestehend aus einer Kombination von:
a) einem Gehäuse (9);
b) einem Leistungsausgangselement (25 oder 8) einer allgemeinen, axialsymmetrischen Gestaltung, welches im Gehäuse (9) drehbar gelagert wird;
c) einer Welle (24 oder 5), die koaxial mit dem Leistungsausgangselement (25 oder 8) angeordnet und im Gehäuse (9) drehbar gelagert ist, wobei diese Welle (24 oder 5) einen ersten und einen zweiten exzentrischen Wellenabschnitt (22 und 23) aufweist, die diametral gegenübereinander angeordnet sind;
d) einem ersten Drehelement (20) mit einem ersten Satz von Zahneingriffelementen, die drehbar auf dem ersten, exzentrischen Wellenabschnitt (22) der Welle (24) gelagert sind, wobei dieser erste Satz von Zahneingriffelementen in einer konzentrischen Anordnung um die Mittelachse des ersten exzentrischen Wellenabschnitts (22) der Welle (24) angeordnet ist;
e) einem zweiten Drehelement (21) mit einem zweiten Satz von Zahneingriffelementen, die drehbar auf dem zweiten exzentrischen Wellenabschnitt (23) der Welle (24) gelagert sind, wobei dieser zweite Satz von Zahneingriffelementen in einer konzentrischen Anordnung um die Mittelachse des zweiten exzentrischen Wellenabschnitts (23) der Welle (24) angeordnet ist; wobei der erste und der zweite Satz von Zahneingriffelementen über ein Teil der konzentrischen Anordnung ineinander eingreift;
f) einem Trägerelement (27), das drehbar um die Mittelachse der Welle (24) angeordnet ist und das eine Bremsvorrichtung (30) aufweist, welche ein Drehen des Trägerelementes verhindert;
g) einem ersten Verbindungsstück (26), das eines der ersten und zweiten Drehelemente (20 und 21) mit dem Leistungsausgangselement (25 oder 8) in einer radial verschiebbaren, relativen Anordnung verbindet, wobei das erste Verbindungsstück (26) die Drehbewegung des einen der ersten und zweiten Drehelemente (20 und 21), die durch die orbitale Bewegung desselben ensteht, auf das Leistungsausgangselement (25 oder 8) überträgt; und
h) einem zweiten Verbindungsstück (28), das das andere der ersten und zweiten Drehelemente (20 und 21) mit dem Trägerelement (27) in einer nicht-drehbaren, radial verschiebbaren, relativen Anordnung verbindet,
wobei das zweite Verbindungsstück (28) die Drehbewegung des anderen der ersten und zweiten Drehelemente (20 und 21), die durch die orbitale Bewegung desselben ensteht, auf das Trägerelement (27) überträgt, wenn die Bremsvorrichtung (30) nicht betätigt wird, und unterbricht somit die Übertragung der Drehbewegung von der Welle (24 oder 5) auf das Leistungsausgangselement (25 oder 8); und das zweite Verbindungsstück (28) verhindert die Drehung des anderen der ersten und zweiten Drehelemente (20 und 21), wenn die Bremsvorrichtung (30) betätigt wird und bewirkt somit die Übertragung der Drehbewegung von der Welle (24 oder 5) auf das Leistungsausgangselement (25 oder 8).

3. Die Kombination gemäß Anspruch 2, wobei der erste und der zweite Satz von Zahneingriffelementen aus zwei Sätzen von ineinander eingreifenden Zahnradverzahnungen (6 und 7) besteht.

4. Die Kombination gemäß Anspruch 2, wobei der erste und der zweite Satz von Zahneingriffelementen aus einem Satz von Walzen (55 oder 57) und einem Satz von Zahnradverzahnungen (54 oder 58), die ineinander eingreifen besteht.

5. Ein epizyklisches Untersetzungsgetriebe bestehend aus einer Kombination von:
a) einem Gehäuse (44);
b) einem Leistungsausgangselement (42) einer allgemeinen axialsymmetrischen Gestaltung, das in dem Gehäuse (44) drehbar gelagert wird;
c) einer Welle (34), die koaxial zum Leistungsausgangselement (42) angeordnet ist und im Gehäuse (44) drehbar gelagert ist, wobei diese Welle (34) einen ersten, exzentrischen Wellenabschnitt (33), einen zweiten, exzentrischen Wellenabschnitt (38), der diametral gegenüber dem ersten, exzentrischen Wellenabschnitt (33) angeordnet ist, und einen dritten exzentrischen Wellenabschnitt (41), der diametral gegenüber den zweiten exzentrischen Wellenabschnitt (38) angeordnet ist, aufweist;
d) einem ersten Drehelement (31) mit einem ersten Satz von Zahneingriffelementen (32), die drehbar auf dem ersten, exzentrischen Wellenabschnitt (33) der Welle (34) gelagert sind, wobei dieser erste Satz von Zahneingriffelementen (32) in einer konzentrischen Anordnung um die Mittelachse des ersten, exzentrischen Wellenabschnitts (33) der Welle (34) angeordnet ist;
e) einem zweiten Drehelement (35) mit einem zweiten und einem dritten Satz von Zahneingriffelementen (36 und 37), die drehbar auf dem zweiten exzentrischen Wellenabschnitt (38) der Welle (34) gelagert sind, wobei dieser zweite und dritte Satz von Zahneingriffelementen (36 und 37) jeweils in einer konzentrischen Anordnung um die Mittelachse des zweiten exzentrischen Wellenabschnitts (38) der Welle (34) angeordnet ist und der erste und der zweite Satz von Zahneingriffelementen (32 und 36) über ein Teil der konzentrischen Anordnungen ineinander eingreifen;
f) einem dritten Drehelement (39) mit einem vierten Satz von Zahneingriffelementen (40), die drehbar auf dem vierten, exzentrischen Wellenabschnitt (41) der Welle (34) gelagert sind, wobei dieser vierte Satz von Zahneingriffelementen (40) in einer konzentrischen Anordnung um die Mittelachse des dritten, exzentrischen Wellenabschnitts (41) der Welle (34) angeordnet ist und der dritte und der vierte Satz von Zahneingriffelementen (37 und 40) über ein Teil der konzentrischen Anordnungen derselben ineinander eingreifen;
g) einem ersten Verbindungsstück (43), das eines der ersten und dritten Drehelemente (31 und 39) mit dem Leistungsausgangselement (42) in einer radial verschiebbaren, relativen Anordnung verbindet, wobei das erste Verbindungsstück (43) die Drehbewegung des einen der ersten und dritten Drehelemente (31 und 39), die durch die orbitale Bewegung desselben ensteht, auf das Leistungsausgangselement (42) überträgt; und
h) einem zweiten Verbindungsstück (45), das das andere der ersten und dritten Drehelemente (31 und 39) mit einem Trägerelement, das koaxial um die Mittelachse der Welle (34), in einer radial verschiebbaren, relativen Anordnung hierzu angeordnet ist, verbindet.

6. Die Kombination gemäß Anspruch 5, wobei das Trägerelement mit dem Gehäuse (44) befestigt ist.

7. Die Kombination gemäß Anspruch 6, wobei jedes Paar der Sätze von Zahneingriffelementen, die ineinander eingreifen, aus zwei Sätzen von Zahnradverzahnungen (6 und 7), die miteinander in Eingriff stehen, bestehen.

8. Die Kombination gemäß Anspruch 6, wobei jedes Paar der Sätze von Zahneingriffelementen, die ineienander eingreifen, aus einem Satz von Walzen (55 oder 57) und einem Satz von Zahnradverzahnungen (54 oder 58), die miteinander in Eingriff stehen, bestehen.

9. Die Kombination gemäß Anspruch 5, wobei das Trägerelement (47) drehbar angeordnet ist und eine Bremsvorrichtung (49) zur Verhinderung der Drehung des Trägerelements (47) einschließt.

10. Die Kombination gemäß Anspruch 9, wobei jedes Paar der Sätze von Zahneingriffelementen, die ineinander eingreifen, aus zwei Sätzen von miteinander in Eingriff stehenden Zahnradverzahnungen (6 und 7) bestehen.

11. Die Kombination gemäß Anspruch 9, wobei jedes Paar der Sätze von Zahneingriffelementen, die ineinander eingreifen, aus einem Satz von Walzen (55 oder 57) und aus einem Satz von Zahnradverzahnungen (54 oder 58), die ineinander eingreifen bestehen.

## Revendications

1. Changement de vitesse mécanique comprenant, en combinaison :
(a) un carter (9) ;
(b) un organe de sortie de puissance (8), de construction sensiblement axialement symétrique, supporté de façon tournante par le carter (9) ;
(c) un arbre (5) disposé en ligne avec l'organe de sortie de puissance (8) et supporté de façon tournante par le carter (9), ledit arbre (5) comportant une première et une deuxième parties excentriques (3 et 4) à excentrations diamètralement opposées ;
(d) un premier organe rotatif (1) comportant un premier ensemble d'éléments d'engrènement, monté sur ladite première partie excentrique (3) de l'arbre (5), ledit premier ensemble d'éléments d'engrènement étant disposé concentriquement autour de l'axe central de la dite première partie excentrique (3) de l'arbre (5), et une pluralité de trous circulaires (13) dont l'axe central est parallèle à l'arbre (5) étant disposés sur un cercle concentrique à l'axe central de ladite première partie excentrique (3) de l'arbre (5) ;
(e) un deuxième organe rotatif (2) comportant un deuxième ensemble d'éléments d'engrènement, monté sur ladite deuxième partie excentrique (4) de l'arbre (5), ledit deuxième ensemble d'éléments d'engrènement étant disposé concentriquement autour de l'axe central de ladite deuxième partie excentrique (4) de l'arbre (5), et une pluralité de trous circulaires (16) dont l'axe central est parallèle à l'arbre (5) étant disposés sur un cercle concentrique à l'axe central de ladite deuxième partie excentrique (4) de l'arbre (5) ; de sorte que lesdits premier et deuxième ensembles d'éléments d'engrènement sont mutuellement en prise sur une portion des dites dispositions concentriques ;
(f) une pluralité de doigts cylindriques circulaires (12), disposés sur un cercle concentrique à l'axe central de l'arbre (5) et rigidement fixés à une pièce (10) montée de façon non tournante sur l'organe de sortie de puissance (8), et engagés dans la pluralité de trous circulaires (13) prévus dans un des premier et deuxième organes rotatifs (1 et 2) avec un jeu permettant un mouvement orbital dudit un des premier et deuxième organes rotatifs (1 et 2) autour de l'axe central de l'arbre (5), de sorte que la combinaison des trous circulaires (13) et des doigts cylindriques circulaires (12) constitue un accouplement (11) qui transmet le mouvement de rotation dudit un des premier et deuxième organes rotatifs (1 et 2), engendré par son mouvement orbital, à l'organe de sortie de puissance (8) ; et
(g) une pluralité de doigts cyilndriques circulaires (15) disposés sur un cercle concentrique à l'axe central de l'arbre (5) et fixés rigidement à un organe porteur tenu par le carter (9), et engagés respectivement dans la pluralité de trous circulaires (16) prévus dans l'autre des premier et deuxième organes rotatifs (1 et 2) avec un jeu permettant un mouvement orbital dudit autre des premier et deuxième organes rotatifs (1 et 2) autour de l'axe central de l'arbre (5), de sorte que la combinaison des trous circulaires (16) et des doigts cylindriques circulaires (15) constitue un accouplement (14) qui empêche un mouvement de rotation dudit autre des premier et deuxième organes rotatifs (1 et 2) par rapport audit organe porteur ;
dans lequel lesdits premier et deuxième ensembles d'éléments d'engrènement, respectivement inclus dans les premier et deuxième organes rotatifs (1 et 2), comprennent un ensemble de rouleaux (55 ou 57) et un ensemble de dents de pignon de chaîne (54 ou 58) en prise mutuelle.

2. Changement de vitesse mécanique comprenant, en combinaison,:
(a) un carter (9) ;
(b) un organe de sortie de puissance (25 ou 8), de construction sensiblement axialement symétrique, supporté de façon tournante par le carter (9) ;
(c) un arbre (24 ou 25) disposé en ligne avec l'organe de sortie de puissance (25 ou 8) et supporté de façon tournante par le carter (9), ledit arbre (24 ou 5) comportant une première et une deuxième parties excentriques (22 et 23) à excentrations diamètralement opposées ;
(d) un premier organe rotatif (20) comportant un premier ensemble d'éléments d'engrènement, monté de façon tournante sur ladite première partie excentrique (22) de l'arbre (24), de sorte que ledit premier ensemble d'éléments d'engrènement est disposé en un agencement concentrique autour de l'axe central de ladite première partie excentrique (22) de l'arbre (24) ;
(e) un deuxième organe rotatif (21) comportant un deuxième ensemble d'éléments d'engrènement, monté de façon tournante sur ladite deuxième partie excentrique (23) de l'arbre (24), de sorte que ledit deuxième ensemble d'éléments d'engrènement est disposé en un agencement concentrique autour de l'axe central de ladite deuxième partie excentrique (23) de l'arbre (24) ; de sorte que lesdits premier et deuxième ensembles d'éléments d'engrènement sont mutuellement en prise sur une portion desdits agencements concentriques ;
(f) un organe porteur (27) disposé de façon tournante autour de l'axe central de l'arbre (24) et comportant des moyens de freinage (30) pour empêcher la rotation dudit organe porteur (27) ;
(g) un premier couplage (26) reliant de façon non tournante un des premier et deuxième organes rotatifs (20 et 21) et l'organe de sortie de puissance (25 ou 8) avec une possibilité de déplacement radial relatif, de sorte que ledit premier couplage (26) transmet le mouvement de rotation dudit un des premier et deuxième organes rotatifs (20 et 21), engendré par son mouvement orbital, à l'organe de sortie de puissance (25 ou 8) ; et
(h) un deuxième couplage (28) reliant de façon non tournante l'autre des premier et deuxième organes rotatifs (20 et 21) et l'organe porteur (27) avec une possibilité de déplacement radial relatif,
dans lequel ledit deuxième couplage (28) transmet le mouvement de rotation dudit autre des premier et deuxième organes rotatifs (20 et 21), engendré par son mouvement orbital, à l'organe porteur (27) lorsque les moyens de freinage (30) sont désactivés et il supprime ainsi la transmission du mouvement de rotation de l'arbre (24 ou 5) à l'organe de sortie de puissance (25 ou 8) ; et ledit deuxième couplage (28) empêche l'autre des premier et deuxième organes rotatifs (20 et 21) de tourner lorsque les moyens de freinage (30) sont activés et il effectue ainsi la transmission du mouvement de rotation de l'arbre (24 ou 5) à l'organe de sortie de puissance (25 ou 8).

3. Combinaison suivant la revendication 2, dans laquelle lesdits premier et deuxième ensembles d'éléments d'engrènement comprennent deux ensembles de dents d'engrenage (6 et 7) en prise mutuelle.

4. Combinaison suivant la revendication 2, dans laquelle lesdits premier et deuxième ensembles d'éléments d'engrènement comprennent un ensemble de rouleaux (55 ou 57) et un ensemble de dents de pignon (54 ou 58) en prise mutuelle.

5. Changement de vitesse mécanique comprenant, en combinaison, :
(a) un carter (44) ;
(b) un organe de sortie de puissance (42), de construction sensiblement axialement symétrique, supporté de façon tournante par le carter (44) ;
(c) un arbre (34) disposé en ligne avec l'organe de sortie de puissance (42) et supporté de façon tournante par le carter (44), ledit arbre (34) comportant une première partie excentrique (33), une deuxième partie excentrique (38) dont l' excentration est diamètralement opposée à celle de ladite première partie excentrique (33), et une troisième partie excentrique (41) dont l' excentration est diamètralement opposée à celle de ladite deuxième partie excentrique (38) ;
(d) un premier organe rotatif (31) comportant un premier ensemble d'éléments d'engrènement (32), monté de façon tournante sur ladite première partie excentrique (33) de l'arbre (34), de sorte que ledit premier ensemble d'éléments d'engrènement (32) est disposé en un agencement concentrique autour de l'axe central de ladite première partie excentrique (33) de l'arbre (34) ;
(e) un deuxième organe rotatif (35) comportant un deuxième et un troisième ensembles d'éléments d'engrènement (36 et 37), monté de façon tournante sur ladite deuxième partie excentrique (38) de l'arbre (34), de sorte que lesdits deuxième et troisième ensembles d'éléments d'engrènement (36 et 37) sont respectivement disposés en un agencement concentrique autour de l'axe central de ladite deuxième partie excentrique (38) de l'arbre (34), et lesdits premier et deuxième ensembles d'éléments d'engrènement (32 et 36) sont en prise mutuelle sur une portion de leurs dits agencements concentriques ;
(f) un troisième organe rotatif (39) comportant un quatrième ensemble d'éléments d'engrènement (40), monté de façon tournante sur ladite troisième partie excentrique (41) de l'arbre (34), de sorte que ledit quatrième ensemble d'éléments d' engrènement (40) est disposé en un agencement concentrique autour de l'axe central de ladite troisième partie excentrique (41) de l'arbre (34), et lesdits troisième et quatrième ensembles d'éléments d'engrènement (37 et 40) sont en prise mutuelle sur une portion de leursdits agencements concentriques ;
(g) un premier couplage (43) reliant de façon non tournante un des premier et troisième organes rotatifs (31 et 39) à l'organe de sortie de puissance (42) avec une possibilité de déplacement radial relatif, de sorte que ledit premier couplage (43) transmet le mouvement de rotation dudit un des premier et troisième organes rotatifs (31 et 39), engendré par son mouvement orbital, à l'organe de sortie de puissance (42) ; et
(h) un deuxième couplage (45) reliant de façon non tournante l'autre des premier et troisième organes rotatifs (31 et 39) à un organe porteur disposé coaxialement autour de l'axe central de l'arbre (34) avec une possibilité de déplacement radial relatif.

6. Combinaison suivant la revendication 6, dans laquelle ledit organe porteur est fixé au carter (44).

7. Combinaison suivant la revendication 6, dans laquelle chaque paire des ensembles d'éléments d'engrènement en prise mutuelle comprend deux ensembles de dents d'engrenage (6 et 7) en prise mutuelle.

8. Combinaison suivant la revendication 6, dans laquelle chaque paire des ensembles d'éléments d'engrènement en prise mutuelle comprend un ensemble de rouleaux (55 ou 57) et un ensemble de dents de pignon (54 ou 58) en prise mutuelle.

9. Combinaison suivant la revendication 5, dans laquelle ledit organe porteur (47) est disposé de façon tournante et comporte des moyens de freinage (49) pour empêcher la rotation dudit organe porteur (47).

10. Combinaison suivant la revendication 9, dans laquelle chaque paire des ensembles d'éléments d'engrènement en prise mutuelle comprend deux ensembles de dents d'engrenage (6 et 7) en prise mutuelle.

11. Combinaison suivant la revendication 9, dans laquelle chaque paire des ensembles d'éléments d'engrènement en prise mutuelle comprend un ensemble de rouleaux (55 ou 57) et un ensemble de dents de pignon (54 ou 58) en prise mutuelle.
